(19) Europäisches Patentamt
European Patent Office
Office européen des brevets

(11) EP 3 792 324 A1

(12) EUROPEAN PATENT APPLICATION
published in accordance with Art. 153(4) EPC

(43) Date of publication:
**17.03.2021 Bulletin 2021/11**

(21) Application number: **19800488.9**

(22) Date of filing: **10.05.2019**

(51) Int Cl.:
***C09J 7/35*** *(2018.01)* ***C09J 7/10*** *(2018.01)*
***C09J 7/25*** *(2018.01)* ***C09J 109/06*** *(2006.01)*
***C09J 165/00*** *(2006.01)* ***C09J 193/04*** *(2006.01)*
***C09J 201/00*** *(2006.01)* ***H01M 8/0284*** *(2016.01)*

(86) International application number:
**PCT/JP2019/018689**

(87) International publication number:
**WO 2019/216402 (14.11.2019 Gazette 2019/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2018 JP 2018091264**

(71) Applicant: **Nitto Shinko Corporation**
**Sakai-shi, Fukui 910-0381 (JP)**

(72) Inventors:
- **AOIKE, Shuhei**
  **Sakai-shi, Fukui 910-0381 (JP)**
- **FUJII, Takaaki**
  **Sakai-shi, Fukui 910-0381 (JP)**

(74) Representative: **Stolmár & Partner**
**Patentanwälte PartG mbB**
**Blumenstraße 17**
**80331 München (DE)**

# (54) HOT-MELT ADHESIVE SHEET

(57) Provided in the present invention is a hot melt adhesive sheet formed of one layer or a plurality of layers, the hot melt adhesive sheet including at least one adhesive layer that adheres to an adherend, the adhesive layer being formed of a polymer composition including a styrene-based rubber and a tackifier, and the tackifier including two tackifiers selected from a group consisting of a rosin-based resin, an alicyclic resin, and a terpene-based resin.

FIG.1

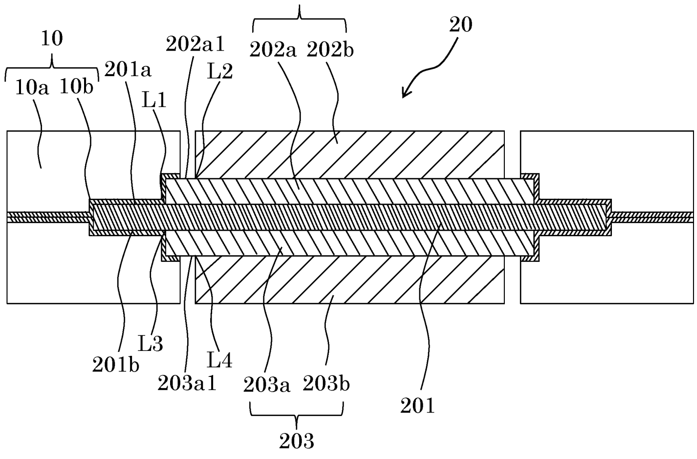




Printed by Jouve, 75001 PARIS (FR)

## Description

CROSS-REFERENCE TO RELATED APPLICATION

This application claims priority to Japanese Patent Application No. 2018-091264, the disclosure of which is incorporated herein by reference in its entirety.

FIELD

The present invention relates to a hot melt adhesive sheet.

BACKGROUND

A known hot melt adhesive sheet includes, for example, a base layer formed of a polymer sheet and an adhesive layer laminated on the base layer and formed of a hot melt adhesive agent (for example, Patent Literature 1). The hot melt adhesive sheet is used, for example, to seal the periphery of an electrolyte membrane of a fuel cell.

CITATION LIST

Patent Literature

Patent Literature 1: JP 2015-168724 A

SUMMARY

Technical Problem

However, the conventional hot melt adhesive sheets can thermally deform (thermally shrink or thermally expand). Therefore, there may be a problem that the thermal deformation causes the hot melt adhesive sheet to hardly join to a desired position of an adherend, or a problem that heat is applied to an adherend to which the hot melt adhesive sheet has joined, causing the hot melt adhesive sheet to deform and be consequently removed from the adherend.

In view of the above problems, therefore, it is an object of the present invention to provide a hot melt adhesive sheet that is less likely to thermally deform.

Solution to Problem

The hot melt adhesive sheet according to the present invention is a hot melt adhesive sheet formed of one layer or a plurality of layers, the hot melt adhesive sheet including at least one adhesive layer that adheres to an adherend, the adhesive layer being formed of a polymer composition including a styrene-based rubber and a tackifier, and the tackifier including two tackifiers selected from a group consisting of a rosin-based resin, an alicyclic resin, and a terpene-based resin.

BRIEF DESCRIPTION OF DRAWINGS

Fig. 1 is a cross-sectional view showing usage of a hot melt adhesive sheet for a membrane electrode assembly.
Fig. 2 is a view showing marks on a test piece of the hot melt adhesive sheet for determining a thermal deformation rate (before heating).

DESCRIPTION OF EMBODIMENTS

Hereinafter, one embodiment of the present invention will be described.

A hot melt adhesive sheet according to this embodiment includes a base layer formed of a polymer sheet and an adhesive layer laminated on at least one side of the base layer. The hot melt adhesive sheet according to this embodiment has a two-layered structure in which the adhesive layer is laminated on one side of the base layer. In the hot melt adhesive sheet, the adhesive layer adheres to an adherend.

The adhesive layer is formed of a polymer composition. The adhesive layer has a storage modulus at 150 °C

of preferably 40,000 Pa or more, more preferably 40,000 to 100,000 Pa, still more preferably 40,000 to 60,000 Pa. The adhesive layer is easily hot melted and adhered when it has a storage modulus at 150 ° C of 100,000 Pa or less. The storage modulus can be measured by the method described in Examples below.

The storage modulus of the adhesive layer formed of the polymer composition tends to be higher as the polymer constituting the polymer composition has a higher molecular weight. The storage modulus of the adhesive layer formed of the polymer composition tends to be high when the polymer constituting the polymer composition is crosslinked or subjected to curing reaction.

The polymer composition includes a styrene-based rubber as a rubber component. Since the styrene-based rubber has a high storage modulus at 150 °C, the polymer composition including the styrene-based rubber can have an increased storage modulus at 150 °C. In addition to the styrene-based rubber, the polymer composition may include other rubber components such as an olefin-based rubber, an acrylic rubber, a styrene-based rubber, a nitrile-based rubber, a polyamide-based rubber, and a silicone-based rubber. The polymer composition may include two or more kinds of the other rubber components.

The polymer composition includes preferably 20 to 80 mass %, more preferably 30 to 70 mass %, of the styrene-based rubber. Examples of the styrene-based rubber include styrene-ethylene-butylene-styrene copolymer (SEBS) rubber, styrene-ethylene-propylene-styrene copolymer (SEPS) rubber, and styrene-isoprene-styrene copolymer (SEEPS), and styrene-ethylene-butylene-styrene copolymer (SEBS) rubber is preferable in terms of having excellent moist and heat resistance and allowing hydrogen gas to hardly penetrate therethrough. The styrene-based rubber includes preferably 10 to 100 mass %, more preferably 50 to 100 mass %, of the styrene-ethylene-butylene-styrene copolymer (SEBS) rubber.

The styrene-based rubber includes preferably 10 to 50 mass %, more preferably 20 to 40 mass %, of styrene as a constituent unit.

Further, the hydrogenation rate of the styrene-based rubber is preferably 50 to 100%, more preferably 80 to 100%. The hydrogenation rate can be measured using a nuclear magnetic resonance (NMR) apparatus.

The weight average molecular weight of the styrene-based rubber is preferably 10,000 to 1,000,000, more preferably 100,000 to 1,000,000. The weight average molecular weight can be determined by gel permeation chromatography (GPC).

The polymer composition includes a tackifier. The tackifier includes two tackifiers selected from the group consisting of a rosin-based resin, an alicyclic resin, and a terpene-based resin. The polymer composition including the tackifier and formed into the adhesive layer can increase the tackiness of the adhesive layer and increase the cohesive force of the adhesive layer. The terpene-based resin may be a terpene phenol. The storage modulus at ordinary temperature (23 °C) of the obtained adhesive layer can be decreased by including an alicyclic resin among the tackifiers. Thus, the obtained adhesive layer can be relatively soft at ordinary temperature. The polymer composition may include, as the tackifier, a phenol resin, a hydrocarbon-based resin, a petroleum resin, or the like. A plurality of such tackifiers may be included. In addition to the tackifier, the polymer composition may include an epoxy resin.

The polymer composition includes preferably 20 to 80 mass %, more preferably 40 to 60 mass %, of two tackifiers selected from the above group. In the case where the polymer composition includes a styrene-based rubber, the polymer composition includes preferably 50 to 150 parts by mass, more preferably 80 to 120 parts by mass, of two tackifiers selected from the above group based on 100 parts by mass of the styrene-based rubber. Further, it is preferable that the polymer composition include one of the two tackifiers selected from the above group and the other of the two tackifiers in a mass ratio of preferably 90:10 to 50:50, more preferably 80:20 to 60:40.

It is preferable that the tackifiers be two resins, namely a rosin-based resin and an alicyclic resin, or two resins, namely a rosin-based resin and a terpene-based resin. Use of the two resins, namely the rosin-based resin and the alicyclic resin or the two resins, namely the rosin-based resin and the terpene-based resin as the tackifiers allows the thermal deformation rate (150 °C, 30 minutes) in the TD direction to be relatively small, as shown in Examples below.

Examples of the resin constituting the polymer sheet include polyethylene terephthalate (PET), polyethylene naphthalate (PEN), polyimide (PI), polysulfone (PSU), polyarylate (PAR), polyetherimide (PEI), polyether ether ketone (PEEK), polyphenylene sulfide (PPS), polyamideimide (PAI), and a fluorine-based polymer. Examples of the resin further include a liquid crystal polymer (LCP). Examples of the liquid crystal polymer (LCP) include liquid crystal polyester. As the resin constituting the polymer sheet, polyethylene terephthalate (PET) is preferable.

As shown in Fig. 1, a hot melt adhesive sheet 10 according to this embodiment includes a base layer 10a and an adhesive layer 10b laminated on at least one side of the base layer 10a. Examples of an adherend to which the adhesive layer 10b adheres include a membrane electrode assembly (MEA) 20 of a fuel cell, as shown in Fig. 1. The membrane electrode assembly (MEA) 20, which is the adherend of this embodiment, is configured such that hydrogen gas permeates therethrough from the negative electrode side to the positive electrode side, and that oxygen supplied on the positive electrode side is caused to react with the hydrogen to enable production of electricity.

As shown in Fig. 1, the membrane electrode assembly (MEA) 20 includes a solid electrolyte membrane 201 having surfaces opposite to each other, on which a positive electrode 202 and a negative electrode 203 are respectively

laminated. The positive electrode 202 includes a positive electrode catalyst layer 202a and a positive electrode gas diffusion layer 202b laminated on the positive electrode catalyst layer 202a, and the positive electrode catalyst layer 202a is laminated on one side of the solid electrolyte membrane 201. The negative electrode 203 includes a negative electrode catalyst layer 203a and a negative electrode gas diffusion layer 203b laminated on the negative electrode catalyst layer 203a, and the negative electrode catalyst layer 203b is laminated on the other side of the solid electrolyte membrane 201.

As shown in Fig. 1, the positive electrode catalyst layer 202a and the negative electrode catalyst layer 203a are formed to have a smaller plane dimension than that of the solid electrolyte membrane 201, and the positive electrode gas diffusion layer 202b and the negative electrode gas diffusion layer 203b are formed to respectively have smaller planar dimensions than those of the positive electrode catalyst layer 202a and the negative electrode catalyst layer 203a. That is, in the membrane electrode conjugate (MEA) 20, each of the plane dimensions of the positive electrode 202 and the negative electrode 203 is smaller than that of the plane dimension of the solid electrolyte membrane 201. Since the positive electrode 202 has a smaller plane dimension than that of the solid electrolyte membrane 201 as aforementioned, a positive electrode side electrolyte membrane exposed area 201a, which is a portion of the solid electrolyte membrane 201 extending outward from the positive electrode catalyst layer 202a to have an exposed surface, is formed in an outer peripheral portion on the positive electrode side of the membrane electrode assembly (MEA) 20. Further, since the negative electrode 203 has a smaller plane dimension than that of the solid electrolyte membrane 201, a negative electrode side electrolyte membrane exposed area 201b, which is a portion of the solid electrolyte membrane 201 extending outward from the negative electrode catalyst layer 203a to have an exposed surface, is formed in an outer peripheral portion on the negative electrode side of the membrane electrode assembly (MEA) 20.

Further, a positive electrode side catalyst layer exposed area 202a1, which is a portion of the positive electrode catalyst layer 202a extending outward from the positive electrode gas diffusion layer 202b to have an exposed surface, is formed on the positive electrode side of the membrane electrode assembly (MEA) 20. The positive electrode side catalyst layer exposed area 202a1 is formed inside the positive electrode side electrolyte membrane exposed area 201a and outside the positive electrode gas diffusion layer 202b. The positive electrode side electrolyte membrane exposed area 201a of this embodiment is formed to circulate around the outer peripheral portion of the membrane electrode assembly (MEA) 20, and is formed in an annular shape. The positive electrode side catalyst layer exposed area 202a1 is formed in an annular shape smaller than that of the positive electrode side electrolyte membrane exposed area 201a. That is, on the positive electrode side of the membrane electrode assembly (MEA) 20, a first boundary line L1 that is a boundary line between the positive electrode side electrolyte membrane exposed area 201a and the positive electrode side catalyst layer exposed area 202a1 is defined, and a second boundary line L2 that is a boundary line between the positive electrode side catalyst layer exposed area 202a1 and the positive electrode gas diffusion layer 202b is defined inside the first boundary line L1.

A negative electrode side catalyst layer exposed area 203a1, which is a portion of the negative electrode catalyst layer 203a extending outward from the negative electrode gas diffusion layer 203b to have an exposed surface, is formed on the negative electrode side of the membrane electrode assembly (MEA) 20. The negative electrode side catalyst layer exposed area 203a1 is formed inside the negative electrode side electrolyte membrane exposed area 201b and outside the negative electrode gas diffusion layer 203b. The negative electrode side electrolyte membrane exposed area 201b of this embodiment is formed to circulate around the outer peripheral portion of the membrane electrode assembly (MEA) 20, and is formed in an annular shape. The negative electrode side catalyst layer exposed area 203a1 is formed in an annular shape smaller than that of the negative electrode side electrolyte membrane exposed area 201b. That is, on the negative electrode side of the membrane electrode assembly (MEA) 20, a third boundary line L3 that is a boundary line between the negative electrode side electrolyte membrane exposed area 201b and the negative electrode side catalyst layer exposed area 203a1 is defined, and a fourth boundary line L4 that is a boundary line between the negative electrode side catalyst layer exposed area 203a1 and the negative electrode gas diffusion layer 203b is defined inside the third boundary line L3.

In the usage shown in Fig. 1, two hot melt adhesive sheets 10, namely a first hot melt adhesive sheet 10 that adheres to the positive electrode side of the membrane electrode assembly (MEA) 20 and a second hot melt adhesive sheet 10 that adheres to the negative electrode side of the membrane electrode assembly (MEA) 20, are used as sub-gasket materials of a fuel cell.

The first hot melt adhesive sheet 10 has such an annular shape as to have the outer peripheral edge positioned outside the outer peripheral edge of the membrane electrode assembly (MEA) 20 when placed on the membrane electrode assembly (MEA) 20, and to have the inner peripheral edge positioned within the positive electrode side catalyst layer exposed area 202a1 and the negative electrode side catalyst layer exposed area 203a1. That is, the hollow portion of the first hot melt adhesive sheet 10 has a shape slightly larger than the positive electrode gas diffusion layer 202b.

The second hot melt adhesive sheet 10 also has a similar shape.

In this embodiment, the first hot melt adhesive sheet 10 and the second hot melt adhesive sheet 10 are used as the sub-gasket materials by causing the outer peripheral portions of the adhesive layers 10b to directly adhere to

each other outside the membrane electrode assembly (MEA) 20.

A portion (i.e., the inner peripheral portion) of the first hot melt adhesive sheet 10 other than the outer peripheral portion adhering to the second hot melt adhesive sheet 10 adheres to the outer peripheral portion of the membrane electrode assembly (MEA) 20, and adheres to an area of the membrane electrode assembly (MEA) 20 extending from the positive electrode side electrolyte membrane exposed area 201a through the first boundary line L1 to the positive electrode side catalyst layer exposed area 202a1. The second hot melt adhesive sheet 10 also similarly adheres to the membrane electrode assembly (MEA) 20.

The hot melt adhesive sheets 10 adhere to the membrane electrode assembly (MEA) 20 as described above to be capable of suppressing functional degradation of a fuel cell caused by the positive electrode gas and the negative electrode gas partially penetrating through the positive electrode side electrolyte membrane exposed area 201a and the negative electrode side electrolyte membrane exposed area 201b. Further, as described above, the hot melt adhesive sheet 10 according to this embodiment exhibits a storage modulus at 150 °C as relatively high as 40,000 Pa or more. Thus, the hot melt adhesive sheets 10 according to this embodiment can relatively favorably maintain their adhesiveness to the solid electrolyte membrane 201, even in the case where the solid electrolyte membrane 201 of the membrane electrode assembly (MEA) 20 is formed of a fluorine resin to be described later, which is relatively unlikely to adhere to an adhesive layer of a conventional hot melt adhesive sheet (for example, an adhesive layer that includes, as a rubber component, a polyurethane-based rubber or a polyester-based rubber). The hot melt adhesive sheets 10 according to this embodiment can relatively favorably maintain their adhesiveness also to the positive electrode catalyst layer 202a and the negative electrode catalyst layer 203a.

In the membrane electrode assembly (MEA) 20, the positive electrode catalyst layer 202a and the negative electrode catalyst layer 203a are generally formed of: a catalyst supporting material such as a carbon material supporting a catalyst; a proton conductive polymer; and a catalyst ink composition including a catalyst, and shows intermediate properties between powder and liquid properties. Thus, the adhesive layers of the aforementioned conventional hot melt adhesive sheets may fail to sufficiently maintain their adhesiveness to the positive electrode catalyst layer 202a and the negative electrode catalyst layer 203a. In particular, this tendency becomes more remarkable at a high temperature (e.g., at 150 °C). As a result, the conventional hot melt adhesive sheets when caused to adhere to the membrane electrode assembly (MEA) 20 may fail to sufficiently suppress the positive electrode gas and the negative electrode gas from partially penetrating through the positive electrode side electrolyte membrane exposed area 201a and the negative electrode side electrolyte membrane exposed area 201b. In contrast, the hot melt adhesive sheets 10 according to this embodiment exhibit a relatively high storage modulus at 150 °C, and can therefore relatively sufficiently maintain their adhesiveness to the positive electrode catalyst layer 202a and the negative electrode catalyst layer 203a even at high temperatures. As a result, it is possible to relatively sufficiently suppress the positive electrode gas and the negative electrode gas from partially permeating through the positive electrode side electrolyte membrane exposed area 201a and the negative electrode side electrolyte membrane exposed area 201b even in use at high temperatures. In addition, the hot melt adhesive sheets 10 can still exhibit their function as the sub-gasket materials even in the case where the positive electrode side electrolyte membrane exposed area 201a and the negative electrode side electrolyte membrane exposed area 201b are formed to be extremely small, that is, for example, in the case where the surface area of the solid electrolyte membrane 201 and the surface area of the positive electrode catalyst layer 202a are made to have substantially the same size and the surface area of the solid electrolyte membrane 201 and the surface area of the negative electrode catalyst layer 203a are made to have substantially the same size, in order to suppress the loss of the solid electrolyte membrane 201 in view of, for example, manufacturing costs.

The solid electrolyte membrane 201 of the membrane electrode assembly (MEA) 20 is formed of, for example, a fluorine resin such as a perfluorocarbon sulfonic acid resin. Examples of the perfluorocarbon sulfonic acid resin include: product name "Nafion" manufactured by DuPont; product name "Flemion" manufactured by AGC Inc.; and product name "Aciplex" manufactured by Asahi Kasei Corporation. The perfluorocarbon sulfonic acid resin is, for example, a resin having a polymer structure shown in the following formula (1). With regard to m, n and x in the following formula (1), for example, $m \geq 1$, $n = 2$, and $x = 5$ to 13.5 hold for Nafion, $m = 0.1$, $n = 2$ to 5, and $x = 1.5$ to 14 hold for "Aciplex", and $m = 0.1$ and $n = 1$ to 5 hold for "Flemion".

[1]

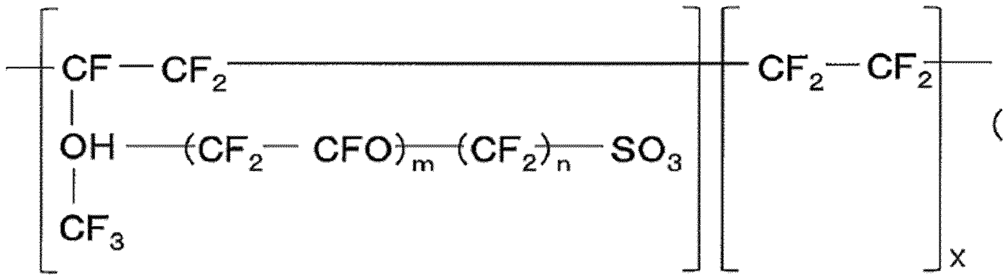

(1)

The positive electrode catalyst layer 202a and the negative electrode catalyst layer 203a are layers including catalyst particles. Examples of the catalyst particles included in the positive electrode catalyst layer 202a include platinum. Examples of the catalyst particles included in the negative electrode catalyst layer 202b include a platinum compound, and examples of the platinum compound include an alloy of platinum and at least one metal selected from the group consisting of ruthenium, palladium, nickel, molybdenum, iridium, iron, and the like.

The positive electrode gas diffusion layer 202b and the negative electrode gas diffusion layer 203b are each composed of a porous conductive base material. Examples of the porous conductive base material include carbon paper and carbon cloth.

The hot melt adhesive sheet according to this embodiment can be used also in a redox flow cell. The hot melt adhesive sheet in a redox flow cell is used for suppressing the permeation of an electrolytic solution.

The hot melt adhesive sheet according to this embodiment is configured as above, and thus has the following advantageous effects.

The hot melt adhesive sheet according to this embodiment is a hot melt adhesive sheet formed of one layer or a plurality of layers, the hot melt adhesive sheet including at least one adhesive layer that adheres to an adherend, wherein the adhesive layer is formed of a polymer composition including a styrene-based rubber and a tackifier, and the tackifier includes two tackifiers selected from a group consisting of a rosin-based resin, an alicyclic resin, and a terpene-based resin.

In such a hot melt adhesive sheet, the adhesive layer is formed of a polymer composition including a styrene-based rubber and a tackifier, and the tackifier includes two tackifiers selected from the group consisting of a rosin-based resin, an alicyclic resin, and a terpene-based resin. Thus, the hot melt adhesive sheet easily retains its shape even when heat is applied thereto, and is consequently less likely to thermally deform. With this configuration, a hot melt adhesive sheet unlikely to thermally deform can be provided.

The hot melt adhesive sheet according to the present invention is not limited to the above embodiment. Further, the hot melt adhesive sheet according to the present invention is not limited by the abovementioned operational effects. Various modifications can be made to the hot melt adhesive sheet according to the present invention without departing from the gist of the present invention.

That is, the hot melt adhesive sheet according to this embodiment has a two-layered structure including a base layer and an adhesive layer, but the hot melt adhesive sheet according to the present invention may have a three-layered structure including a base layer and adhesive layers provided on both sides of the base layer, or may have a single-layered structure including an adhesive layer only. In other words, the hot melt adhesive sheet according to the present invention may be formed of a single layer or a plurality of layers, and may include at least one adhesive layer.

EXAMPLES

Next, the present invention will be further specifically described with reference to Examples and Comparative Examples.

(Example 1)

A styrene-based rubber (styrene-ethylene-butylene-styrene copolymer (SEBS) rubber) as a rubber component, and a rosin-based resin and a terpene-based resin as resin components were included in an organic solvent in mixing amounts shown in Table 1 below to prepare a varnish. The mass ratio of styrene as a constituent unit of SEBS was 29 mass %. Then, the varnish was applied to a polyethylene terephthalate film (thickness: 12 $\mu$m) followed by being allowed to dry, to prepare a hot melt adhesive sheet including an adhesive layer having a dry thickness of about 50 pm.

(Example 2)

A styrene-based rubber (styrene-isoprene-butadiene-styrene copolymer (SEEPS) rubber) as a rubber component, and a rosin-based resin and an alicyclic resin as resin components were included in an organic solvent in mixing amounts shown in Table 1 below to prepare a varnish. The mass ratio of styrene as a constituent unit of SEEPS was 30 mass %. Then, a hot melt adhesive sheet was prepared in the same manner as in Example 1.

(Example 3)

A styrene-based rubber (SEEPS) as a rubber component, and an alicyclic resin and a terpene-based resin as resin components were included in an organic solvent in mixing amounts shown in Table 1 below to prepare a varnish. Then, a hot melt adhesive sheet was prepared in the same manner as in Example 1.

(Example 4)

A styrene-based rubber (styrene-isoprene-styrene copolymer (SEPS) rubber) as a rubber component, and an alicyclic resin and a terpene-based resin as resin components were included in an organic solvent in mixing amounts shown in Table 1 below to prepare a varnish. The mass ratio of styrene as a constituent unit of SEPS was 30 mass %. Then, a hot melt adhesive sheet was prepared in the same manner as in Example 1.

(Example 5)

A styrene-based rubber (SEBS) as a rubber component, and an alicyclic resin and a terpene-based resin as resin components were included in an organic solvent in mixing amounts shown in Table 1 below to prepare a varnish. Then, a hot melt adhesive sheet was prepared in the same manner as in Example 1.

(Example 6)

A styrene-based rubber (SEBS) as a rubber component, and an alicyclic resin and a terpene-based resin as resin components were included in an organic solvent in mixing amounts shown in Table 1 below to prepare a varnish. Then, a hot melt adhesive sheet was prepared in the same manner as in Example 1.

(Comparative Example 1)

A polyurethane-based rubber and a polyester-based rubber as rubber components, an epoxy-based resin as a resin component, and silica as a filler were included in an organic solvent in mixing amounts shown in Table 1 below to prepare a varnish. Then, a hot melt adhesive sheet was prepared in the same manner as in Example 1.

(Comparative Example 2)

A polyester-based rubber as a rubber component, an epoxy-based resin as a resin component, and talc as a filler were included in an organic solvent in mixing amounts shown in Table 1 below to prepare a varnish. Then, a hot melt adhesive sheet was prepared in the same manner as in Example 1.

(Comparative Example 3)

A polyurethane-based rubber and a polyester-based rubber as rubber components, and a rosin-based resin and a terpene-based resin as resin components were included in an organic solvent in mixing amounts shown in Table 1 below to prepare a varnish. Then, a hot melt adhesive sheet was prepared in the same manner as in Example 1.

(Comparative Example 4)

A polyester-based rubber as a rubber component, and a rosin-based resin and a terpene-based resin as resin components were included in an organic solvent in mixing amounts shown in Table 1 below to prepare a varnish. Then, a hot melt adhesive sheet was prepared in the same manner as in Example 1.

<Storage modulus>

The storage modulus of the adhesive layer of the hot melt adhesive sheet according to each of the Examples and the Comparative Examples was measured. Specifically, first, a portion of the adhesive layer was cut out from the hot melt adhesive sheet according to each of the Examples and Comparative Examples. Then, the storage modulus at

150 °C of the adhesive layer was measured according to JIS K7244-7: 2007 "Plastics - Determination of dynamic mechanical properties - Part 7: Torsional vibration - Non-resonance method" under the following conditions:

Measurement temperature range: 30 °C to 200 °C
Heating rate: 5 °C/min
Frequency: 1 Hz
Strain: 0.1%

<Thermal deformation rate>

The thermal deformation rate of the hot melt adhesive sheet according to each of the Examples and the Comparative Examples was measured. Specifically, first, a test piece of 70 mm (TD direction) × 70 mm (MD direction) was cut out from the hot melt adhesive sheet according to each of the Examples and the Comparative Examples. Then, four points shown in Fig. 2 were marked on the test piece to measure two distances (about 50 mm each) between two marked points in each of the TD direction and the MD direction. Thereafter, the test piece was heated at 150 °C for 30 minutes, and the two distances between the two marked points in each of the TD direction and the MD direction were measured. Two thermal deformation rates in each of the TD direction and the MD direction were determined from the distance values before and after heating on the basis of the following equation, followed by obtaining the average thermal deformation rate in each of the TD direction and the MD direction.

$$\text{Thermal deformation rate (\%)} = |(\text{Distance after heating} / \text{Distance before heating}) - 1| \times 100$$

Table 1

| | | | Ex. 1 | Ex. 2 | Ex. 3 | Ex. 4 | Ex. 5 | Ex. 6 | C.Ex.1 | C Ex.2 | C Ex.3 | C Ex.4 |
|---|---|---|---|---|---|---|---|---|---|---|---|---|
| Mixing amount (parts by mass) | Rubber component | Styrene-based (SEBS) | 52 | | | | 44 | 53 | | | | |
| | | Styrene-based (SEPS) | | | | 44 | | | | | | |
| | | Styrene-based (SEEPS) | | 37 | 37 | | | | | | | |
| | | Polyurethane-based | | | | | | | 29 | | 35 | |
| | | Polyester-based | | | | | | | 38 | 66 | 47 | 80 |
| | Resin component | Rosin-based resin | 35 | 4 | | | | | | | 11 | 12 |
| | | Alicyclic-based resin | | 59 | 59 | 52 | 52 | 42 | | | | |
| | | Terpene-based resin | 13 | | 4 | 4 | 4 | 5 | | | 7 | 8 |
| | | Epoxy-based resin | | | | | | | 15 | 17 | | |
| | Filler | Silica | | | | | | | 18 | | | |
| | | Talc | | | | | | | | 17 | | |
| Storage modulus (150 °C) (Pa) | | | 48193 | 67257 | 79235 | 110810 | 117420 | 159750 | 20013 | 17847 | 4712 | 7507 |
| Ave. thermal deformation rate (%) (150 °C, 30 mins) | | TD MD | 0.07 | 0.09 | 0.10 | 0.10 | 0.11 | 0.12 | 0.16 | 0.09 | 0.13 | 0.11 |
| | | | 0.87 | 0.87 | 0.79 | 0.86 | 0.81 | 0.79 | 1.14 | 1.03 | 1.13 | 1.03 |

As shown in Table 1, the hot melt adhesive sheet according to each of the Examples had a storage modulus of 40,000 Pa or more, and had a lower thermal deformation rate in the MD direction than that of the hot melt adhesive sheet according to each of the Comparative Examples having a storage modulus of less than 40,000 Pa. The hot melt adhesive sheets according to Examples 3, 5, and 6 each had a particularly low thermal deformation rate in the MD direction as compared with the hot melt adhesive sheets according to the other examples. In addition, the hot melt adhesive sheets according to Examples 1 and 2 each had a particularly low thermal deformation rate in the TD direction as compared with the hot melt adhesive sheets according to the other examples.

REFERENCE SIGNS LIST

10: Hot melt adhesive sheet
10a: Base layer
10b: Adhesive layer
20: Membrane electrode assembly (MEA)
201: Solid electrolyte membrane
201a: Positive electrode side electrolyte membrane exposed area
201b: Negative electrode side electrolyte membrane exposed area
202: Positive electrode
202a: Positive electrode catalyst layer
202a1: Positive electrode side catalyst layer exposed area
202b: Positive electrode gas diffusion layer
203: Negative electrode
203a: Negative electrode catalyst layer
203a1: Negative electrode side catalyst layer exposed area
203b: Negative electrode gas diffusion layer
L1: First boundary line
L2: Second boundary line
L3: Third boundary line
L4: Fourth boundary line

## Claims

1. A hot melt adhesive sheet formed of one layer or a plurality of layers,
the hot melt adhesive sheet comprising at least one adhesive layer that adheres to an adherend,
the adhesive layer being formed of a polymer composition comprising a styrene-based rubber and a tackifier, and
the tackifier comprising two tackifiers selected from a group consisting of a rosin-based resin, an alicyclic resin, and a terpene-based resin.

2. The holt melt adhesive sheet according to claim 1, wherein the adhesive layer has a storage modulus at 150 °C of 40,000 Pa or more.

3. The holt melt adhesive sheet according to claim 1 or 2, configured to be used by adhering to a membrane of a membrane electrode assembly of a fuel cell, wherein
the membrane is formed of a fluorine resin.

4. The hot melt adhesive sheet according to any one of claims 1 to 3, wherein
the polymer composition comprises a styrene-based rubber, a rosin-based resin, and a terpene-based resin.

5. The hot melt adhesive sheet according to any one of claims 1 to 4, further comprising a base layer formed of a polymer sheet, wherein
the polymer sheet comprises polyethylene terephthalate.

FIG.1

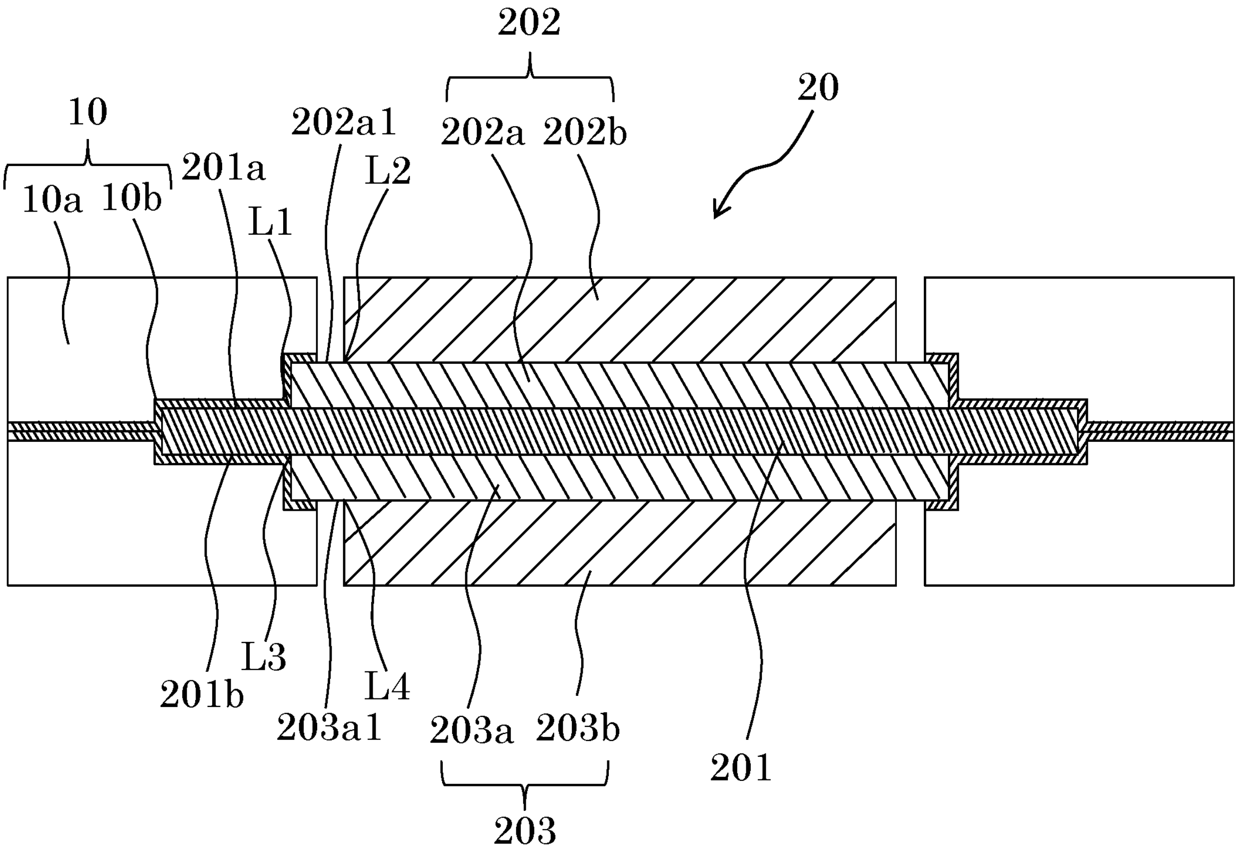
202
20
10
202a1
202a
202b
201a
L2
10a
10b
L1
L3
L4
201b
203a1
203a
203b
201
203

FIG.2

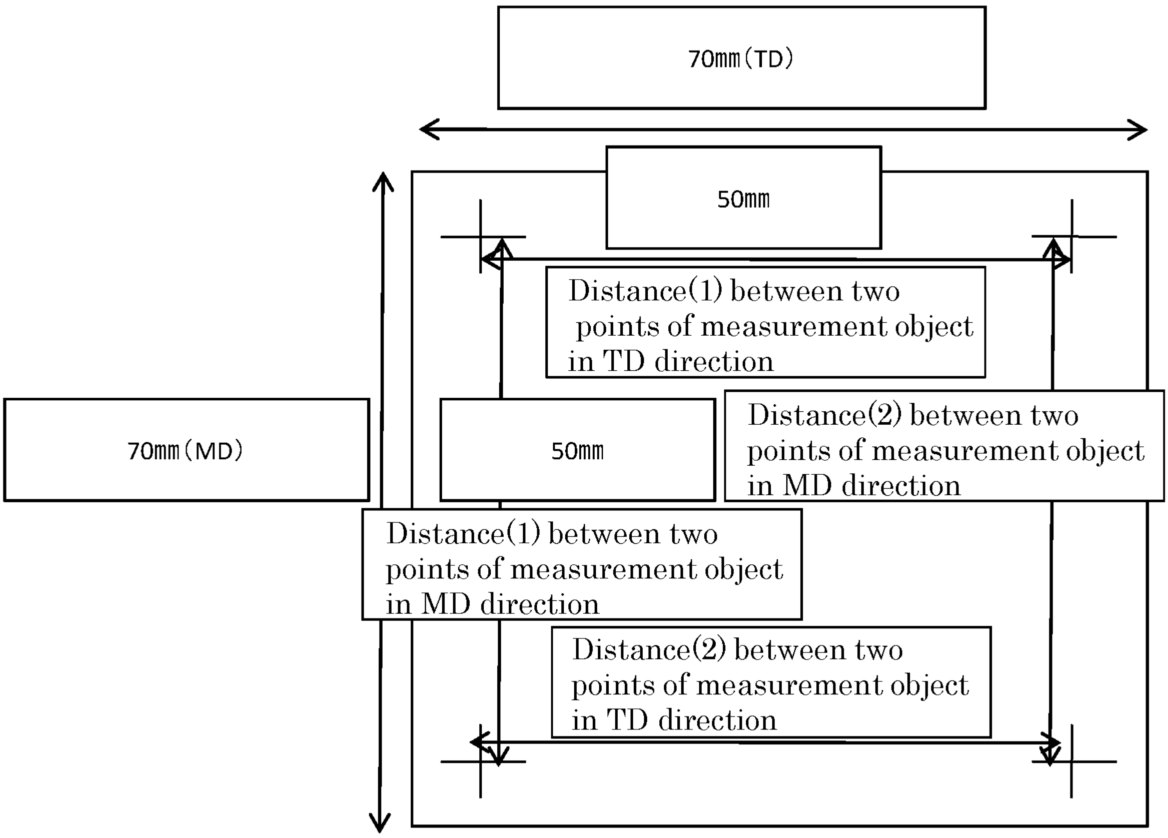
70mm(TD)
50mm
Distance(1) between two points of measurement object in TD direction
70mm(MD)
50mm
Distance(2) between two points of measurement object in MD direction
Distance(1) between two points of measurement object in MD direction
Distance(2) between two points of measurement object in TD direction

## INTERNATIONAL SEARCH REPORT

International application No.
PCT/JP2019/018689

A. CLASSIFICATION OF SUBJECT MATTER
Int.Cl. C09J7/35(2018.01)i, C09J7/10(2018.01)i, C09J7/25(2018.01)i, C09J109/06(2006.01)i, C09J165/00(2006.01)i, C09J193/04(2006.01)i, C09J201/00(2006.01)i, H01M8/0284(2016.01)i
According to International Patent Classification (IPC) or to both national classification and IPC

B. FIELDS SEARCHED
Minimum documentation searched (classification system followed by classification symbols)
Int.Cl. C09J7/35, C09J7/10, C09J7/25, C09J109/06, C09J165/00, C09J193/04, C09J201/00, H01M8/0284

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-236965 A (TOYO INK SC HOLDINGS CO., LTD.) 06 December 2012, claim 1, paragraphs [0014], [0017], [0052], [0054], table 1 & WO 2012/147951 A1 | 1-2, 4<br>3 |
| X<br>Y | WO 2016/056468 A1 (NITTO DENKO CORP.) 14 April 2016, claims 1, 4, 6, paragraphs [0057]-[0062], [0068], examples & US 2017/0292042 A1 claims 1, 8, paragraphs [0108]-[0116], [0126], examples & EP 3205697 A1 | 1-2, 5<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 June 2019 (24.06.2019) | 02 July 2019 (02.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/018689

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-7748 A (NITTO DENKO CORP.) 18 January 2016, claim 11, paragraphs [0045], [0072], [0080]-[0081], example 5 (Family: none) | 3 |
| Y | JP 2015-168724 A (NITTO SHINKO CORPORATION) 28 September 2015, claim 1, paragraph [0041] & US 2015/0031817 A1, claim 1, paragraph [0142] & EP 2832812 A1 | 3 |
| Y | JP 2016-62719 A (NITTO SHINKO CORPORATION) 25 April 2016, claim 1, paragraph [0030] (Family: none) | 3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018091264 A
- JP 2015168724 A